# EUROPEAN PATENT APPLICATION

(11) **EP 2 081 334 A1**
(43) Date of publication of application: **22.07.2009**
(21) Application number: 08100523.3
(22) Date of filing: 16.01.2008
(51) Int. Cl.: H04L 12/56

(54) **Method for reducing interference in industrial installation wireless networks**

(71) Applicant: ABB Research Ltd., 8050 Zürich (CH)
(72) Inventor: Hekland, Fredrik, NO-0656 OSLO (NO)
(74) Representative: Kock, Ina

(57) **Abstract**

A method is described for reducing interference in a spread spectrum wireless network arranged for purposes of process monitoring and control in an industrial installation. The wireless network comprises a plurality of wireless nodes (5) being wireless nodes of sensors and/or actuators arranged at various positions. The system also comprises, and a base station controller (3) and means for sensing radio interference on one or more frequencies. The method comprises the steps of sampling a plurality of frequencies, determining which of the plurality of frequencies are in use by other transmitters (9), and allocating on one or more selected frequencies in said part of the radio spectrum to the wireless nodes according to a predetermined strategy for interference avoidance. An industrial control system including a wireless network is also described.

## Description

### TECHNICAL FIELD.

The invention concerns a method for reducing interference in a spread spectrum wireless network in an industrial installation. In particular it concerns a method for reducing interference in wireless networks used for purposes of process monitoring and control by allocating frequencies to wireless nodes of sensors and/or actuators so as to avoid interference.

### TECHNICAL BACKGROUND

Most industrial plants are provided with control systems or distributed control systems for controlling and monitoring of a plurality of functions, processes, production steps and the like. This usually involves a large number of field devices comprising sensors, detectors, PLCs, control units, drive units etc positioned throughout an installation. A communication infrastructure has to be present in the plant for enabling the data and information communication between the different field devices of the control system. The communication infrastructure frequently contains a wired fieldbus infrastructure to which a large number of field devices can be connected and controlled. The same system may utilize a number of field bus communication protocols such as Foundation, HART and Profibus. There has been a trend in communication to go from wired to wireless communication systems, and there is a more recent trend also in industrial process applications. A few wireless field devices and control units have been developed and also the process communication protocols have been developed to handle wireless communication. However the use of a large number of sensors or field devices arranged with wireless communication in an industrial installation brings with it other challenges.

As the wireless frequency spectrum generally has become more and more crowded, intelligent and efficient use of the spectrum is becoming increasingly more important. This is especially critical in applications where the available power is limited, such as for battery-powered wireless temperature sensors, pressure sensors etc.. Battery operated devices for example cannot normally expend or waste power on re-transmitting data. Also in delay-constrained applications such as for instance wireless closed-loop control, the occurrence of retransmissions may cause undesirable delay in the control loop. It is also important to avoid interference and collisions so that the spectral efficiency can be increased, enabling more wireless devices to operate at the same time.

Thus it is sometimes required to avoid operating in certain parts of the available spectrum. One method of avoiding some frequencies completely is known as blacklisting. Within spread spectrum wireless networks or LANs operating in the unlicensed 2.4 GHz band wireless networks or WLANs may be configured by blacklisting selected frequencies to avoid interference or else to reduce or avoid causing interference to neighbouring systems.

Blacklisting of channels to allow the system responsible to avoid undue interference from known sources has some drawbacks: firstly, a smaller fraction of the frequency channels is available for use, thus limiting the overall capacity in a network. Secondly, in some implementations such as wirelessHART, a blacklisting command sent out by Network manager, or a similar function, is most often required to be carried out at start-up of the network; or else for the network to be re-started after a hard blacklisting command is sent out.

Wireless systems communicate using a shared medium, thus to avoid collision and the need for retransmission of data, neighbouring communication systems must avoid disturbing each other by, for example, using orthogonal signaling of some kind. Common techniques for interference avoidance are time-division multiple access (TDMA), frequency-division multiple access (FDMA), code-division multiple access (CDMA) and space-division multiple access (SDMA). There are, however, some drawbacks associated with each of these techniques, making it hard to guarantee interference-free communication. TDMA requires synchronicity, effectively ruling this out as an interference mitigation technique across the different systems. The same applies to CDMA which also requires strict power-control among the different transmitting nodes to avoid the near-far problem. SDMA has the benefit of controlling the radiation of the antenna pattern, trying to produce a "wired-equivalent channel" which does not interfere with others. The drawback of this last approach is the need for bigger antennas (either arrays or parabolic discs) that have to be carefully aligned.

JP 2006067462 Interference wave prediction type frequency control communication method and communication control device, to Yamada Masaya et al., assigned to Sumitomo electric industries, describes a method using an interference wave prediction type frequency control communication method, and a device for indicating a change to an optimum frequency used for wireless communication in a wireless communication network when communication quality being deteriorated is addressed by selecting the optimum frequency which is unaffected mostly by the interference wave after determining the interference wave.

A recent development from a neighbouring technical area of avoiding interference is called cognitive radios. These radios search for unused frequency blocks and use them as long as the "owner" of the frequency block is not present, as some sort of adaptive FDMA. The subject of using unused portions of licensed but under-utilised frequencies such as bands reserved for TV channel use has been, and currently is being addressed by a Working Group on Wireless Regional Area Networks ("WRANs"), according to a standard IEEE 802. This development is aimed amongst other things, at making unused parts of licensed frequency bands available for use by non-interfering users, such as mobile radio terminals, ie mobile phones and mobile phones with data services. In a recent article, Recent Advances in Cognitive Communications, by Mody, Blatt, Mills et.al., IEEE Communications Magazine, October 2007, the authors describe in detail recent advances in what is called cognitive communication in the context of signal processing, communications, pattern classification and machine learning to detect signals in a given spectrum of interest.

Cognitive radios collect information about the spectrum use in the area of interest. A disadvantage of sensing the spectrum at one single location is that one runs the risk of not detecting low-powered interferers that are far away from the sensing station (for example a hidden terminal problem). This interferer may still cause problems to second wireless transmitter that is close by the low-powered interferer.

### SUMMARY OF THE INVENTION

According to an aspect of the present invention an improvement is described in a method for reducing interference in a spread spectrum wireless network arranged for purposes of process monitoring and control in an industrial installation, said wireless network comprising a plurality of wireless nodes of sensors and/or actuators arranged at various locations and a base station controller, which method comprises sampling, using one or more of said plurality of wireless nodes, a plurality of frequencies in said spread spectrum at one or more said locations, determining which of the plurality of frequencies are in use by other transmitters at the one or more said locations, and allocating frequencies for spread spectrum transmissions by at least one node of said plurality of nodes at one of the one or more said locations dependent on the determination of which of the plurality of frequencies are in use by other transmitters.

According to an embodiment of the present invention an improvement is described in a method for reducing interference in a spread spectrum wireless network arranged for purposes of process monitoring and control in an industrial installation, said wireless network comprising a plurality of wireless nodes of sensors and/or actuators arranged at various locations and a base station controller, which method comprises determining one or more frequencies in the plurality of frequencies for at least one node of the plurality of nodes to avoid or use at one of said locations. An advantage of this is that interference avoidance may carried out only in those areas of the network affected by a given interference pattern and frequency.

According to an embodiment of the present invention an improvement is described in a method for reducing interference in a spread spectrum wireless network arranged for purposes of process monitoring and control in an industrial installation, said wireless network comprising a plurality of wireless nodes of sensors and/or actuators arranged at various locations and a base station controller, which method comprises determining one or more frequencies in the plurality of frequencies for all of the plurality of nodes to avoid or use at one of said locations.

According to another embodiment of the present invention an improvement is described in a method for reducing interference in a spread spectrum wireless network arranged for purposes of process monitoring and control in an industrial installation, said wireless network comprising a plurality of wireless nodes of sensors and/or actuators arranged at various locations and a base station controller, which method comprises transmitting information retrieved from sampling a plurality of frequencies in said spread spectrum at one or more said locations to a central processing node or master node using spread spectrum technology.

According to another embodiment of the present invention an improvement is described in a method for reducing interference in a spread spectrum wireless network arranged for purposes of process monitoring and control in an industrial installation, said wireless network comprising a plurality of wireless nodes of sensors and/or actuators arranged at various locations and a base station controller, which method comprises determining at the central processing node or master node which of the plurality of frequencies at a said location are in use by other transmitters based on sensing carried out by at least one of said plurality of nodes.

According to another embodiment of the present invention an improvement is described in a method for reducing interference in a spread spectrum wireless network arranged for purposes of process monitoring and control in an industrial installation, said wireless network comprising a plurality of wireless nodes of sensors and/or actuators arranged at various locations and a base station controller, which method comprises arranging at least one of the said plurality of nodes to sample the plurality of frequencies during one or more periods when the at least one of said plurality of nodes is not transmitting.

According to another embodiment of the present invention an improvement is described in a method for reducing interference in a spread spectrum wireless network arranged for purposes of process monitoring and control in an industrial installation, said wireless network comprising a plurality of wireless nodes of sensors and/or actuators arranged at various locations and a base station controller, which method comprises arranging at least one of the said plurality of nodes to sample the plurality of frequencies during one or more periods when at least one of said plurality of nodes is not receiving.

According to another embodiment of the present invention an improvement is described in a method for reducing interference in a spread spectrum wireless network arranged for purposes of process monitoring and control in an industrial installation, said wireless network comprising a plurality of wireless nodes of sensors and/or actuators arranged at various locations and a base station controller, which method comprises determining which of the plurality of frequencies are in use by other transmitters and predicting which of the plurality of frequencies will be free of interference, and allocating frequencies to one or more nodes based on the prediction.

According to another embodiment of the present invention an improvement is described in a method for reducing interference in a spread spectrum wireless network arranged for purposes of process monitoring and control in an industrial installation, said wireless network comprising a plurality of wireless nodes of sensors and/or actuators arranged at various locations and a base station controller, which method comprises detecting a use pattern of one or more frequencies in the plurality of frequencies and predicting future use of the one or more frequencies. By this means a random or non-random hop sequence for detected an interfering transmitter may be determined as a base for predicting time periods for avoiding interference on a given frequncy.

According to another embodiment of the present invention an improvement is described in a method for reducing interference in a spread spectrum wireless network arranged for purposes of process monitoring and control in an industrial installation, said wireless network comprising a plurality of wireless nodes of sensors and/or actuators arranged at various locations and a base station controller, which method comprises allocating frequencies to one or more nodes in a said location based on the prediction.

A solution to the problem of interference with wireless nodes in a wireless network in an industrial setting provided according to the invention is to employ spectrum sensing or frequency sensing that collects information about the spectrum use on one or more frequencies which is used to determine and predict frequencies or channels that are expected to be free. The information on detected spectrum use is analysed to detect, for example, frequency use patterns, and preferably non-random use patterns from which predictions about future use can be made. These frequencies may then be intelligently allocated to one or more wireless nodes so that interference can be avoided or at least minimised.

In a preferred embodiment of the solution to the problem of avoiding interference for wireless nodes in a wireless network in an industrial setting, spatially distributed sensing is employed. Distributed sensing collects information about the spectrum use at geographically separated nodes (which may be sensor network nodes, or routing nodes in a mesh network). Each wireless node can then propagate the collected data to a central processing unit for determination and predictions which are used to allocate spectrum to its subordinate, possibly geographically separated wireless units, in an intelligent manner. This is especially relevant in the crowded Industrial, Scientific and Medical (ISM) band (2.4GHz).

There are some particular challenges with spectrum sensing in wireless sensor networks. First of all, turning the radio transmitter/receiver on to listen for nearby interferers is expensive in terms of energy use. Battery operated nodes, temperature sensors, pressure sensors etc. are designed to sleep as much as possible when not transmitting in order to maximise battery life. However, grid powered sensors, actuators, gateways or routing nodes are often available in sensor networks, providing access to almost unlimited energy for monitoring the spectrum. In this context, whereas line-powered may mean that the wireless node is powered with by an external power supply, such as a 4-20mA DC supply of the type used for data collection in industrial plants, the phrase grid-powered is used to describe devices that are connected to a power source, such as a local AC power grid. The invention is not limited to use with grid powered devices and may be carried out with adapted 4-20mA DC, solar collectors and other types of local, regional or central power supplies may be used.

Another challenge is the method for medium access. When using carrier-sense multiple access (CSMA), the reception times are random and thus a receiver does not know when it should listen on a specific frequency in for receiving data from neighbours. Spending too much time listening on other frequencies greatly reduces the efficiency and increases delay on the sensor network's own performance. The situation is different for TDMA systems where the nodes "know" exactly when it should send and receive data. The remaining time may be directed to searching the other frequency bands for free/occupied bands. When the radio is grid-powered, the required power for having the radio receiver powered on is not a limitation. So in at least one aspect of the invention a grid-powered sensor or router node is comprised as a part of a TDMA based (sensor) network, a network such as for example wireless HART. This form of power supply, grid-powered, enables the node to scan other frequency bands for interfering transmitters whenever it is not scheduled for reception or transmission of data. For many wireless systems there is no intelligent frequency allocation today. Frequency allocation either has to be done manually, which often requires total control of the transmitters in the area, or the systems must be sufficiently robust, or over-dimensioned, to tolerate interference. Communication delay is a problem today due to the level of retransmissions necessary. Optionally a radio may be line-powered, by means of power accumulated from the data network and/or from other power sources such as solar, so that the required power for having the radio receiver powered on is not a limitation.

According to another aspect of the present invention an improvement is described in the form of a system comprising a spread spectrum wireless network arranged for purposes of process monitoring and control in an industrial installation, said wireless network comprising a plurality of wireless nodes of wireless nodes of sensors and/or actuators arranged at various locations, and a base station controller, which system comprises wireless radio frequency (RF) means for sampling a plurality of frequencies in said spread spectrum at one or more said locations and for determining which of the plurality of frequencies are in use by other transmitters, and means for allocating frequencies for spread spectrum transmissions by at least one node at one of the one or more said locations of said plurality of nodes, the allocations being based on said determination.

An advantage of the invention is that interference can be reduced or avoided in a wireless network. Preferably grid-powered wireless nodes are primarily used to determine free wireless frequency spectrum in order to allocate frequency blocks intelligently with the result that interference is minimised. An effect of this intelligent allocation of wireless frequencies is that collisions are also avoided thus minimising the associated increased use of power and time delay caused by re-transmissions.

Another advantage of the invention is that frequency allocation may be updated for one or more parts of the wireless network on a frequent or semi-continuous base. Frequency allocation may easily change or be optimised as conditions in a wireless network change. This has the added advantage that temporary interference, for example temporary presence of a vehicle, or periodic use of disruptive equipment, is quickly reduced by being detected relatively early. Then when the temporary interference has subsided the subsequently free frequencies are also made available quickly and not avoided or blacklisted unnecessarily for long periods of time.

In certain cases, in for example highly dynamic interfering systems, the information collected by sensor nodes might not be propagated fast enough across the network to a central frequency allocation node or gateway. This may be alleviated by implementing a distributed frequency allocation scheme. A plurality of grid-powered nodes arranged for allocating frequencies to one or more nodes in the vicinity may be distributed across an area containing a number of sensor nodes in the wireless network. In this a way frequency allocation and updates of frequency allocation may be provided more quickly in an area close to an interferer. Such nodes arranged for frequency allocation have to be grid-powered due to the high associated cost with having the radio receiver on in order to listen for interferers. Other sensor nodes served by a grid-powered frequency allocator may be arranged with limited power supplies, a battery, a solar collector and the like.

In a preferred embodiment of the methods of the invention one or more methods may be carried out by a computing device comprising one or more microprocessors, processors or computers. The computing device, which may be comprised in a wireless node, comprises a memory storage device for storing one or more computer programs for carrying out the improved methods. Preferably such computer program contains instructions for the processor to perform the method as mentioned above and described in more detail below.

### BRIEF DESCRIPTION OF THE DRAWINGS

Embodiments of the invention will now be described, by way of example only, with particular reference to the accompanying drawings in which:
FIGURE 1 is a schematic diagram showing sensing of frequency use and allocation among nodes of unused frequencies in a spread spectrum wireless network according to an embodiment of the invention;
FIGURE 2 is a schematic block diagram showing a network with a network manager function and a spectrum allocation manager, according to another embodiment of the invention;
FIGURE 3 is a flowchart for a method for allocating frequencies to nodes of a wireless network based on sensing activity or usage on wireless channels, according to another aspect of the invention;
FIGURE 4 is a schematic diagram showing distributed sensing of frequency use and allocation of unused frequencies in a spread spectrum wireless network according to another embodiment of the invention;
FIGURE 5 is a schematic diagram for a TDMA slot schema showing active slots and inactive slots available for spectrum sensing or monitoring according to an embodiment of the invention.

### DETAILED DESCRIPTION OF THE EMBODIMENTS

This invention describes a method of avoiding interference in an industrial wireless network using a spread spectrum technology for wireless communications. The method involves spectrum sensing or frequency sensing to collect information about the spectrum use on one or more frequencies. This information is then used to determine and predict frequencies or channels that are expected to be free. The frequencies predicted to be free may then be intelligently allocated to one or more wireless nodes to avoid or at least minimise interference.

An industrial sensor network provides by means of an aspect of the invention an excellent utility for performing distributed spectrum sensing, as each wireless node connected to the sensor comprises a radio receiver which can be used to monitor the frequency spectrum usage in the node's vicinity. Moreover, a sensor network usually consists of several or a large number of nodes which are spread out to cover a large area, thus enabling monitoring of a much larger area than a single powerful radio (which cannot hear low-power transmitters which are far away). The information about the spectrum utilization would in a centralised embodiment be submitted to a "spectrum management server" which would use this information to optimize the spectrum allocation to the systems it is serving (e.g. wireless control networks, sensor networks or wireless LAN system).

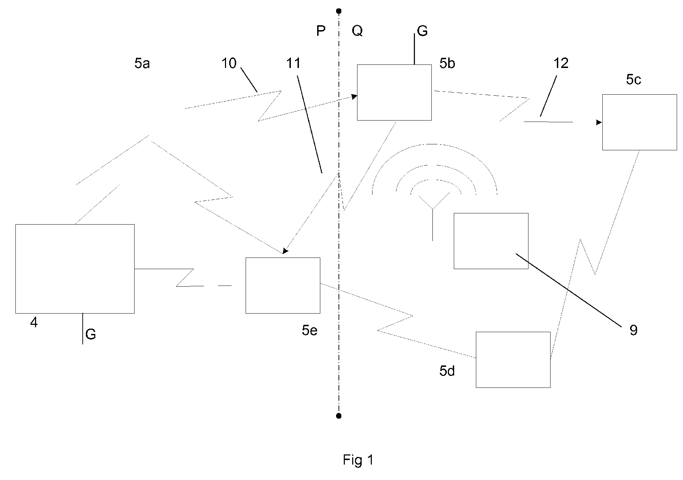

Figure 1 shows schematically an industrial wireless network including a gateway 4 (or a form of controller, hub or router or other network device powered from a grid G), and a number of industrial sensor nodes or actuator nodes 5a-e. Transmissions are taking place in the network on different channels, such as predetermined frequency slots 10, 11, 12. A radio transmission source 9 is within range potentially causing interference.

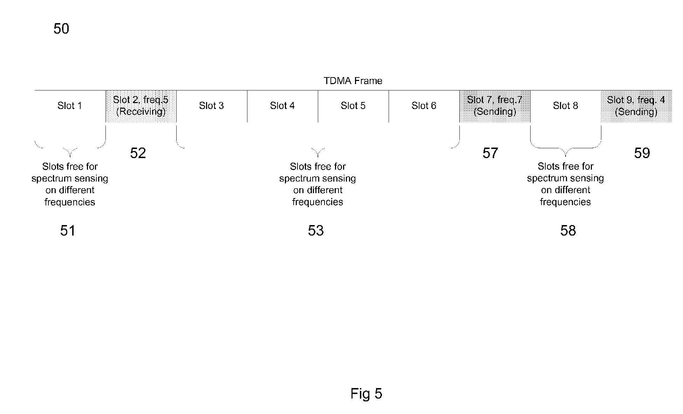

Node 5a which may be a sensor node or a routing node, transmits 10 for example, on slot 3, frequency 5 from a part P of the geographical area where the network nodes are located. Node 5b, which is grid-powered, transmits 11 for example on a channel such as Slot 7, frequency 7, and may also transmit on another channel 12 such as on Slot 9, frequency 4, and from a part Q in another part of the geographical area. See also Fig 5 in respect of Slot 7 (57), Slot 9 (59).

In another embodiment a number of the nodes each monitor the spectrum and sense which frequencies are in use. Preferably this sensing step is carried out when the processor for the radio transmitter and/or receiver is idle - see also Figure 5 below. Preferably this monitoring is carried out by grid-powered sensors or field devices or nodes such as 5b, where power consumption is not an issue. For sensors or nodes that are battery powered such frequency monitoring, sampling and processing may require too much power and shorten the battery life unacceptably. It is also possible to use line powered wireless sensors to carry out frequency monitoring, or a limited form of frequency monitoring, where such sensors can accumulate power taken from the data network and/or other sources.

Frequencies determined as already in use are identified and transmission frequencies for each node then allocated so as to avoid frequencies already in use. Thus, in terms of Figure 1, Node 5a in part P of the area can send on channel 10, but node 5b in part Q of the area has determined that an interfering station 9 is using the frequency of channel 10. Node 5b allocates transmission to free channels 11, 12 for transmission within range of interfering station 9.

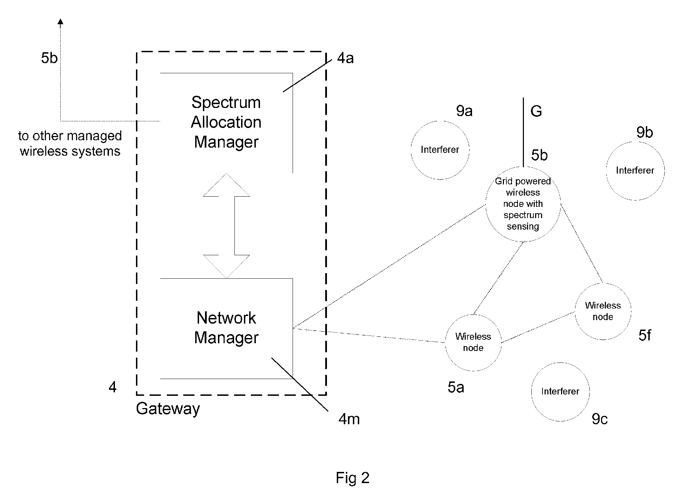

The method may be applied for allocating frequencies to an individual wireless node, to a group of nodes, to an area including a number of nodes. Figure 2 shows a gateway 4 that comprises a network function or Manager 4m and a Spectrum Allocation function 4a or Manager. One node, indicated as 5b in this example, is a grid powered (G) wireless node arranged for spectrum sensing or a spectrum monitor. Node 5b detects interference from, say transmitters 9a and 9b, and reports used frequencies or preferably unused frequency blocks to the network manager function 4m provided at, in this example given, the gateway level. A frequency allocation function 4a then allocates frequencies to node 5b that are predicted based on the use pattern that has been sensed, in this case, by a local node 5b. The gateway or other network device comprising the Network manager function will normally be arranged to send the frequency use or frequency blocks not-in-use on to other wireless systems that are managed. Distributed nodes such as 5b in a wireless network provide distributed spectrum sensing so that frequency allocation may be predicted or calculated for nodes in most parts of a network and even for nodes that are not arranged to carry out spectrum monitoring; that is for e.g. battery powered nodes or adapted line-powered wireless sensors that do not have sufficient power resources to carry out spectrum sensing and/or the processing necessary for frequency allocation.

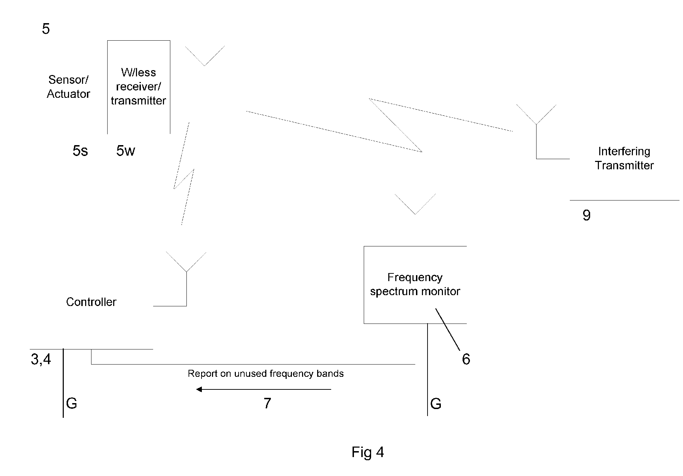

Figure 4 shows an industrial wireless network including a form of controller 3 (or a gateway such as 4 Figs 1,2) and a sensor or actuator node 5. The sensor or actuator node is a sensor or actuator or measuring instrument etc. 5s arranged connected to a unit with wireless receiver/transmitter capacity 5w. A dedicated frequency spectrum monitor 6 is shown connected to the controller 3 of the wireless network. It is preferably grid powered and monitors spectrum use within range, and sends reports 7 of, for example unused frequency bands, to the controller 3, or optionally to another hub or node. A radio transmission source 9 is within range of the sensor/actuator node 5, potentially causing interference.

The spectrum monitor 6 may for example comprise a wide-band antenna and a wide-band receiver. A processor such as a Field-Programmable Gate Array (FPGA) or a Digital Signal Processor (DSP) then processes a signal to determine where there is activity, in which frequencies or blocks of frequencies. In certain forms, other types of processors including a Complex Programmable Logic Device (CPLD) or an Application Specific Integrated Circuit or an (ASIC) may be used. Part of the spectrum monitor function may be carried out by a wireless node 5a-5e.

The availability of channels or blocks with frequencies not affected or relatively unaffected by interference is preferably calculated to provided a prediction. The processor of a frequency monitor such as spectrum monitor 6, or of wireless node 5, 5w, uses one or more methods to process and/or extract from detected RF transmission on a given frequency or group of frequencies a usage pattern such as a hopping sequence. This processed or extracted information is used in order to predict which frequency blocks will be free, and which blocks will be occupied in the future. This information can be fed 7 to a controller 3 (or optionally a gateway 4 or node 5) of a wireless network, or part of a wireless network, in order to allocate frequencies to the nodes concerned so that they can operate on the frequency bands which will experience the least interference. The information for frequency allocation may be also fed 7 into a wireless closed-loop control system, so that a wireless control loop may operate using the frequency bands which contain the least interference. The advantage of the last-named application of distributed sensor monitoring is that undesirable delay in the control loop caused by the occurrence of retransmissions is greatly reduced.

The controller 3 (which may optionally also be a gateway 4, hub, router or node 5) may also be arranged with a processor, an FPGA or DSP for example, or other from of computing device or circuit, that can be operated to determine which frequency blocks are in use, to predict from received radio signals which frequency blocks will be free, and which will be occupied in the future. Thus a single node, or a local node running as a local Master, may be arranged to carry out frequency allocation in a part only of the radio network, e.g. one or some nodes. A central controller is preferably arranged with a database for storing the results of the monitored radio activity as a base for calculating free frequency blocks, and for calculating time periods in the future when the frequency blocks are expected or predicted to be free.

Frequencies may be allocated dependent on a determination of frequency use and a prediction of what the usage will be, and what the unused frequency blocks will be, in the near future. The sampling, determination and predictions may be repeated at as short times as necessary. In this way nodes in a wireless network, or in part of a network, may adapt to transmission conditions and to facilitate communications with reduced interference from wireless systems sharing the same radio coverage range. Hop sequences of radio transmissions from interferers 9 in the proximity may be inferred by means of an inference engine, by extrapolation, by general statistical methods or other means to detect a hop sequence that is not completely random. Also temporary interference is quickly reduced by being detected relatively early and then free frequencies when the temporary interference has subsided, made available quickly and not avoided or blacklisted for long periods unnecessarily.

Figure 5 shows a frame structure describing the transmit/receive schedule for a single node, in this case a Time Division Multiple Access (TDMA) frame 50. The figure shows a frame with 9 slots 51-59. In this diagram slot 2, on frequency 5 indicated as 52 is receiving. Slot 1 (51) and slots 3-6 (53) are free and so are available to be used for frequency sensing. Slot 7 (57) on frequency 7 and slot 9 on frequency 4(59) are transmitting. Nodes operating in a TDMA mode "know" exactly when they are expected to be receiving and when they are expected to be transmitting. Thus slots are available for the remainder of the time on a known or predictable basis and can be used for spectrum sensing and for repeated spectrum sensing. Given a determination of which frequencies are in use and which are free, frequencies may be allocated in a logical and/or adaptive way to enable reduced interference, reduced collisions, reduced round-trip times and more effective radio communication.

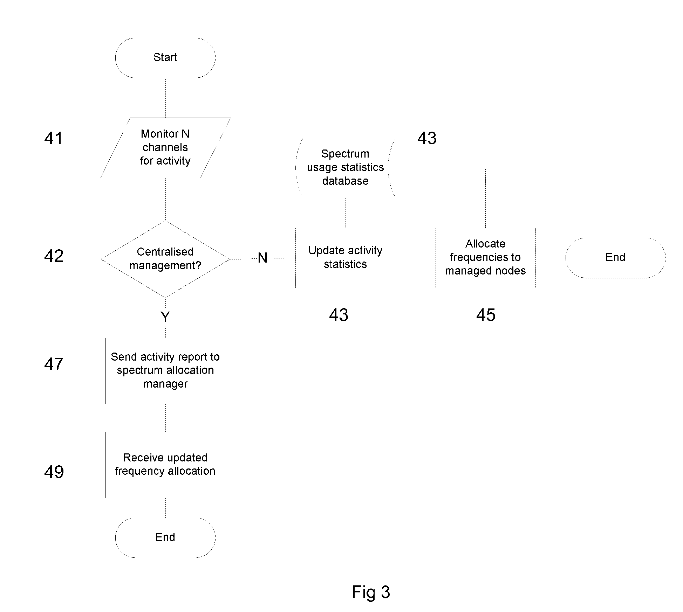

Figure 3 is a flowchart showing a method according to an aspect of the invention. Figure 3 shows the following steps:
41 One or more, N, channels are monitored for activity,
42 If the network is managed in a central way:
   No, then 43 update activity statistics,
   44 update and/or access spectrum usage statistics database and 45 allocate frequencies to managed nodes
   Yes, if the network is managed in a central way:
47 send activity report to a spectrum allocation function or manager, and then at one or more nodes:
49 receive updated frequency allocation.

Updating may be carried out with a variable frequency. In a part of a wireless network where wireless nodes form part of a control loop, some wireless nodes may be scheduled to be updated within a period of milliseconds, for example 10ms or less for closed loop control, and depending in part on how much time is need by to process an algorithm or other determination. For a part of a wireless network where a measured variable changes slowly, periodic updates may be scheduled to take place at longer intervals of seconds or minutes. In the latter case, slow updates may be arranged to be varied or switchable to fast updating, dependent on detection of certain predetermined control events within a process or process control area. One advantage of predicting the future free channels as described in this specification, is that less frequent updates are needed, and thus less bandwidth is consumed.

Methods of the invention may be supervised, controlled or carried out by one or more computer programs. One or more microprocessors (or processors or computers) comprise a central processing unit CPU connected to or comprised in one or more of the above described controllers, gateways, routers or other nodes, which processors, or computers perform the steps of the methods according to one or more aspects of the invention, as described for example for operating or controlling a system as described with reference to Figure 3. It is to be understood that the computer programs for carrying out methods according to the invention may also be run on one or more general purpose industrial microprocessors or PLCs or computers instead of one or more specially adapted computers or processors.

The computer program comprises computer program code elements or software code portions that make the computer or processor perform the methods using equations, algorithms, data, stored values, calculations, synchronisations and the like for the detection prediction and allocation methods previously described, and for example in relation to the flowchart of Figures 4. A part of the program may be stored in a processor as above, but also in a ROM, RAM, PROM, EPROM or EEPROM chip or other memory storage device. The or some of the programs in part or in whole may also be stored locally (or centrally) on, or in, a memory storage device of a control system, and/or on suitable computer readable medium such as a magnetic disk, CD-ROM or DVD disk, hard disk, magneto-optical memory storage means, in volatile memory, in flash memory, as firmware, or stored on a data server. Other known and suitable media, including removable memory media, a USB memory stick and other removable flash memories, hard drives etc. may also be used.

It should be noted that while the above describes exemplifying embodiments of the invention, there are several variations and modifications which may be made to the disclosed solution without departing from the scope of the present invention as defined in the appended claims.

## Claims

1. A method for reducing interference in a spread spectrum wireless network arranged for purposes of process monitoring and control in an industrial installation said wireless network comprising a plurality of wireless nodes (5) of sensors and/or actuators arranged at various locations (P, Q), and a base station controller (3) and at least one radio transmission interference source (9), **characterised by** the steps of
- sampling, using one or more of said plurality of wireless nodes (5), a plurality of frequencies in said spread spectrum at one or more said locations,
- determining which of the plurality of frequencies are in use by other transmitters (9) at the one or more said locations, and
- allocating frequencies for spread spectrum transmissions by at least one node of said plurality of nodes at one of the one or more said locations (P, Q) dependent on the determination of which of the plurality of frequencies are in use by other transmitters.

2. A method according to claim 1, **characterised by** determining one or more frequencies in the plurality of frequencies for at least one node of the plurality of nodes to avoid or use at one of said locations.

3. A method according to claim 1, **characterised by** determining one or more frequencies in the plurality of frequencies for all of the plurality of nodes to avoid or use at one of said locations.

4. A method according to claim 1, **characterised by** determining one or more frequencies in the plurality of frequencies to avoid or use at one of said locations in a part (P, Q) of said wireless network.

5. A method according to claim 1, **characterised by** transmitting information (7) retrieved from sampling a plurality of frequencies in said spread spectrum at one or more said locations to a central processing node (3) or master node using spread spectrum technology.

6. A method according to claim 1 or 5, **characterised by** determining at the central processing node (3), or a master node, from sensing carried out by at least one of said plurality of nodes which of the plurality of frequencies are in use by other transmitters (9, 9a-c) at one of said locations in a part of the network (P, Q) dependent on sensing carried out by at least one of said plurality of nodes positioned in a known relation to a said location of one or more of said plurality of nodes.

7. A method according to claim 6, **characterised by** determining at the central processing node (3) or master node which of the plurality of frequencies at the said location are in use by other transmitters (9) based on sensing carried out by at least one of said plurality of nodes (5a-e).

8. A method according to claim 1, **characterised by** arranging at least one of the said plurality of nodes to sample the plurality of frequencies during one or more periods when the at least one of said plurality of nodes is not transmitting.

9. A method according to claim 1, **characterised by** arranging at least one of the said plurality of nodes (5) to sample the plurality of frequencies during one or more periods when at least one of said plurality of nodes is not receiving.

10. A method according to claim 1, **characterised by** arranging at least one of said plurality of nodes to sample the plurality of frequencies during one or more periods (51, 53, 58) of a spread spectrum frame (50).

11. A method according to claim 1 or 6, **characterised by** determining which of the plurality of frequencies are in use by other transmitters (9, 9a-c) and
- predicting which of the plurality of frequencies will be free of interference, and
- allocating frequencies to one or more nodes based on the prediction.

12. A method according to claim 11, **characterised by** detecting a use pattern of one or more frequencies in the plurality of frequencies and predicting future use of the one or more frequencies.

13. A method according to claim 12, **characterised by** predicting future use of the one or more frequencies by means of an inference engine, extrapolation, or by general statistical methods.

14. A method according to claim 11 or 13, **characterised by** allocating frequencies to one or more nodes in a said location based on the prediction.

15. A method according to claim 1, **characterised by** determining one or more frequencies in the plurality of frequencies for all of the plurality of nodes to avoid or use and updating that determination or prediction on a periodic basis or an event basis.

16. A method according to claim 1, **characterised in that** at least one node (5b) of said plurality of wireless nodes (5) is grid powered.

17. A method according to any previous claim, **characterised in that** at least one of said plurality of wireless nodes (5) is adapted to be line powered with a 4-20mA DC supply.

18. A computer program for reducing interference in a spread spectrum wireless network operating in an unlicensed part of the radio spectrum, said program containing computer program elements or software code portions to make a computer or processor carry out a method according to claim 1.

19. A computer program product embodied on a computer readable medium which when read into a computer or processor will cause the computer or processor to carry out one or more instructions for a method according to the steps of any of claims 1-17.

20. An industrial control system comprising a spread spectrum wireless network arranged for purposes of process monitoring and control in an industrial installation, said wireless network comprising a plurality of wireless nodes (5) of wireless nodes of sensors and/or actuators arranged at various locations, and a base station controller (3) and at least one radio transmission interference source (9), **characterised by**
- wireless RF means (6, 5, 5w) for sampling a plurality of frequencies in said spread spectrum at one or more said locations and
determining which of the plurality of frequencies are in use by other transmitters (9), and
means (3, 4, 4a) for allocating frequencies for spread spectrum transmissions by at least one node at one of the one or more said locations of said plurality of nodes, the allocations being based on said determination.

21. A system according to claim 20, **characterised by** means for determining one or more frequencies in the plurality of frequencies for all of the plurality of nodes to avoid or use.

22. A system according to claim 20, **characterised by** calculation means for predicting future use of the one or more frequencies by means of an inference engine, extrapolation, or by general statistical methods.

23. A system according to claim 20, **characterised by** a central processing node (3) or gateway (4) arranged with a computer or processor for determining from sensing carried out by at least one of the plurality of nodes (5a-e) at one or more said locations which of the plurality of frequencies are at a given said location in use by other transmitters (9).

24. A system according to claim 20, **characterised by** a master node with means for determining from the sensing carried out by at least one of the plurality of nodes which of the plurality of frequencies are in use by other transmitters (9) in a part of the network (K, L).

25. A system according to claim 20, **characterised by** a data collection network comprising a power supply from a grid connected to one or more sensors, actuators, field devices monitored or controlled by said industrial control system.

26. A system according to claim 20 or 25, **characterised in that** at least one part of the data collection network connected to sensors, actuators, field devices monitored or controlled by said industrial control system which is arranged comprising a 4-20mA DC power supply.

27. A system according to claim 20, **characterised by** a data collection network connected to sensors, actuators, field devices monitored or controlled by said industrial control system which collection network comprises at least one fieldbus part.

28. A system according to claim 20, **characterised in that** at least one of said a plurality of wireless nodes (5) of wireless nodes of sensors and/or actuators is battery powered or solar powered.

29. A system according to claim 20, **characterised by** a processor and/or a memory storage device comprising a computer program for reducing interference in a spread spectrum wireless network operating in an unlicensed part of the radio spectrum, said program containing computer program elements or software code portions to make a computer or processor
determine which of said plurality of frequencies are in use by other transmitters (9) at the one or more said locations based on sampling, using one or more of said plurality of wireless nodes (5), a plurality of frequencies in said spread spectrum at one or more said locations,
and
- allocate frequencies for spread spectrum transmissions by at least one node of said plurality of nodes at one of the one or more said locations (P, Q) dependent on the determination of which of the plurality of frequencies are in use by other transmitters.

30. A system according to any previous claim 20-29, **characterised in that** one or more of said plurality of wireless nodes (5) of wireless nodes of sensors and/or actuators may be comprised as a grid powered network device being any from the group of routing node (5b), hub, gateway (4), controller (3), sensor node, actuator node.

31. A system according to claim 19, **characterised by** comprising
- radio frequency monitoring means for determining which of the plurality of frequencies are in use by other transmitters (9) at one or more said locations, and
- a computer or processor programmed for predicting which of the plurality of frequencies will be free of interference at one or more said locations, and
- allocating frequencies based on the prediction to one or more nodes placed at one or more said locations.

32. Use of a spread spectrum wireless network arranged for purposes of process monitoring and control in an industrial installation, said wireless network comprising a plurality of wireless nodes (5) of wireless nodes of sensors and/or actuators arranged at various locations, and a base station controller (3), for the purpose of avoiding wireless interference of one or more of the plurality of wireless nodes of the spread spectrum wireless network.
